Europäisches Patentamt

**European Patent Office**

Office européen des brevets

(11) Publication number: **0 192 469**

A2

(12) **EUROPEAN PATENT APPLICATION**

(21) Application number: **86301154.0**

(22) Date of filing: **19.02.86**

(51) Int. Cl.⁴: **H 02 K 21/08**
**H 02 K 29/06, H 02 K 7/116**
**H 02 K 9/22, H 02 P 6/00**

(30) Priority: **19.02.85 GB 8504185**

(43) Date of publication of application:
**27.08.86 Bulletin 86/35**

(84) Designated Contracting States:
**AT BE CH DE FR GB IT LI SE**

(71) Applicant: **DOBSON PARK INDUSTRIES PLC**
**Dobson Park House Colwick Industrial Estate**
**Nottingham NG1 2BX(GB)**

(72) Inventor: **Ward, Richard**
**18 Kingsway**
**Worsley Greater Manchester(GB)**

(72) Inventor: **Corbett, William Robert**
**16 Whiteside Avenue Hindley**
**Wigan Greater Manchester(GB)**

(72) Inventor: **Ford, Leslie Walter**
**34 Derwent Avenue**
**Hatch End Middlesex(GB)**

(74) Representative: **Stanley, David William et al,**
**APPLEYARD LEES & CO. 15 Clare Road Halifax**
**West Yorkshire HX1 2HY(GB)**

(54) **Electric motors and power tools.**

(57) A hand power tool comprises an electric motor 40 having a rare earth permanent magnet rotor 3 and a polyphase wound stator 4 within a totally enclosed body 5, which in turn is mounted within a housing 2 of the hand tool. The rotor 3 is covered with a thermally and electrically insulative sleeve 12. Primary and secondary output shafts 42 and 49 rotate in the same sense, but one at twice the speed of the other. Thus, no bearings in the motor have to deal with an angular speed greater than half the actual rotor speed. Associated with the motor 1 is electronic control circuitry arranged to generate a polyphase alternating supply and to connect that supply to the stator 4, thereby to produce a rotating magnetic field. Means are disclosed of cooling the rotor, and various electronic circuit configurations are disclosed, for the motor control.

EP 0 192 469 A2

./...

Croydon Printing Company Ltd.

FIG.4.

0192469

## ELECTRIC MOTORS AND POWER TOOLS

This invention relates to electric motors and power tools, and is concerned particularly although not exclusively with hand power tools which are electrically driven.

Portable electrically driven hand tools such as drills, saws, planers and grinders are generally powered by motors of the one-phase a.c. series type, also known as the universal motor. The main merit of the universal motor is its high power/weight ratio which is attained by running at high speed, e.g. 15,000 rev/min. A secondary feature which is useful in certain applications is the ease with which speed control can be effected. The complex construction of the machine, which comprises a commutator winding on the rotor and field windings on the stator, has being reduced as a drawback by the availability of highly-developed automated machinery for armature winding and for making connections to the commutator. However, the problems which result from having to transfer current to the rotor by means of brushes remain.

The quality of commutation attainable in universal motors is inherently inferior to that achieved in d.c. machines due to transformer e.m.f.'s induced in the coils, which are momentarily short-circuited by the brushes. A fair level of sparking in the brushes is accepted as normal. This leads to rapid brush wear and the need for frequent brush replacement. In many instances, the problem is compounded by the ingresss of dust, which is unavoidable in view of the environment in which tools often operate, and the need to employ a ventilated construction for cooling purposes. In the latter respect, universal motors tend to dissipate an appreciable amount of heat.

The induction motor, with its brushless construction, does not suffer the above problems. However, its power/weight ratio is rendered unacceptable in most cases by the maximum practical speed limit of 3,000 revs/min which is effectively imposed by a 50Hz mains supply.

Preferred embodiments of the present invention aim to provide electrically driven portable hand tools having an improved power/weight ratio.

More generally, according to a first aspect of the present invention, there is provided an electric motor comprising a permanent magnet rotor, a polyphase wound stator, and electronic control circuitry arranged to generate a polyphase alternating supply and to connect said supply to the stator thereby to produce a rotating magnetic field, wherein the rotor is surrounded by a layer of thermally insulative material.

In the context of this specification, the term "polyphase alternating supply" includes a pulsed d.c. supply which is fed in a phased manner to the phase windings of a polyphase wound stator.

Preferably, said thermally insulative material is also an electrically insulative material.

According to a second aspect of the present invention, there is provided an electric motor comprising a permanent magnet rotor, a polyphase wound stator, and electronic control circuitry arranged to generate a polyphase alternating supply and to connect said supply to the stator thereby to produce a rotating magnetic field, wherein the rotor is mounted on a shaft which is provided with conduction means adapted to conduct heat

3

0192469

from, and thereby to cool, the rotor.

Preferably, the magnetic material of the rotor comprises a rare earth. For example, such a magnetic material may comprise samarium cobalt or neodymium iron.

The rotor may be of disc form. Alternatively, it may be of cylindrical form.

Said control circuitry may be adapted to receive a d.c. supply and to invert it to generate said polyphase alternating supply. The control circuitry may comprise rectifier means adapted to receive an alternating mains supply and rectify it to provide said d.c. supply.

Said control circuitry may comprise detector means arranged to detect change of angular position of the rotor. Said detector means may comprise a coding disc arranged to rotate with the rotor, and sensor means arranged change of angular position of the coding disc.

Said coding disc may be an optical coding disc. It may be formed with a plurality of apertures, with said sensor means adapted to sense the transmission of light (or other radiation - e.g. infra-red radiation) through said apertures.

Such apertures may be arranged in first and second sets, with the sensor means comprising first and second sensors arranged to sense transmission of light through apertures of said first set and said second set respectively. Said first set may comprise a pair of diametrically opposed apertures, with said second set comprising a plurality of apertures spaced at uniform angular position between said diametrically opposed apertures.

0192469

Alternatively, the coding disc may be a disc having magnetised zones which are detected by Hall-effect transducers or pick-up coils. As another alternative, angular position may be sensed by a voltage induced in pick-up coils by the main flux of the motor, or by the back e.m.f. in the main coils of the motor.

The coding disc may serve as a cooling fan for the rotor.

The motor preferably includes a housing within which said rotor, stator, and electronic control circuitry are disposed. In such an arrangement, said electrical control circuitry may be disposed at one end of said housing. Said housing may be formed with vents in the vicinity of said electronic control circuitry, for the passage of coolant fluid therethrough.

Preferably, said rotor and stator are housed within an enclosed body, to which said electronic circuitry is external.

The rotor may be mounted on a hollow drive shaft, with means provided for passing a coolant fluid through the drive shaft.

The rotor may be mounted on a hollow drive shaft, in which there is fitted a heat pipe having an end which projects from the drive shaft.

The rotor may be mounted on a shaft which comprises a core of a material of high thermal conductivity.

A heat sink may be fitted to a projecting end of a shaft on which the rotor is mounted. Such a heat sink may be in the form of a fan arranged to draw coolant fluid through itself and over a housing of the motor.

The invention extends also to a power tool which is provided with an electric motor in accordance with the first and/or second aspect of the invention. The power tool may be a portable hand tool.

According to a third aspect of the present invention, there is provided a power tool comprising a rotary motor, an output shaft and bearings for the output shaft, the bearings being arranged to rotate in the same sense as the output shaft such that the relative angular speed of the output shaft, with respect to the bearings, is less than its absolute angular speed.

Said output shaft may be a primary output shaft which is arranged to rotate with the rotor of the motor, the tool further comprising a secondary output shaft and a gear train which connects said output shafts and is arranged to step down the angular speed between the primary and secondary output shafts.

Said primary output shaft may be adapted to rotate with said bearings.

The ratio of said gear train may be substantially 2:1.

Preferably, said motor is an electric motor, which may be in accordance with the first or second aspect of the invention.

According to a fourth aspect of the invention, there is provided an electric motor comprising a rotor, a stator, electronic control circuitry arranged to generate an alternating supply and to connect said supply to the stator thereby to produce a rotating magnetic field, a magnet arranged to rotate with the rotor, and a search coil arranged to detect the magnet and therefore the angular position of the rotor.

According to a fifth aspect of the present invention, there is provided an electronic control circuit for an electric motor, the circuit being arranged to generate an alternating supply and to connect said supply to the stator of the motor thereby to produce a rotating magnetic field, the circuit being adapted to receive a rectified but unsmoothed power supply and including current limiting means for limiting current flow to the stator during excursions of the power supply above a predetermined level.

According to a sixth aspect of the invention, there is provided an electronic control circuit for an electric motor, the circuit being arranged to generate an alternating supply and to connect said supply to the stator of the motor thereby to produce a rotating magnetic field, the circuit being adapted to receive input signals representing operating parameters of a motor under control and to calculate therefrom optimum timing parameters of the alternating supply to the motor.

For a better understanding of the invention and to show how the same may be carried into effect, reference will now be made, by way of example, to the accompanying diagrammatic drawings, in which:

Figure 1 illustrates an electric motor for a portable hand tool, in longitudinal section;

Figure 2 illustrates the relative angular positions of apertures in an optical coding disc of the motor;

0192469

Figure 3 is a circuit diagram of electronic control circuitry of the motor;

Figure 4 illustrates a modified electric motor in a portable angle grinder, in a broken longitudinal sectional view;

Figure 5 illustrates, in longitudinal section, an electric motor with an alternative cooling system;

Figure 6 illustrates, in longitudinal section, an electric motor of disc form;

Figure 7 is a block diagram of an alternative electronic motor drive control circuit;

Figure 8 illustrates an example of a circuit construction of amplifiers of the circuit of Figure 7;

Figure 9 is a wave form diagram illustrating an idealised synthesis of a 3-phase supply; and

Figure 10 is a wave form diagram illustrating switching voltages of one phase relative to a rectified 50 Hz supply.

In the Figures, like reference numerals denote like or corresponding parts.

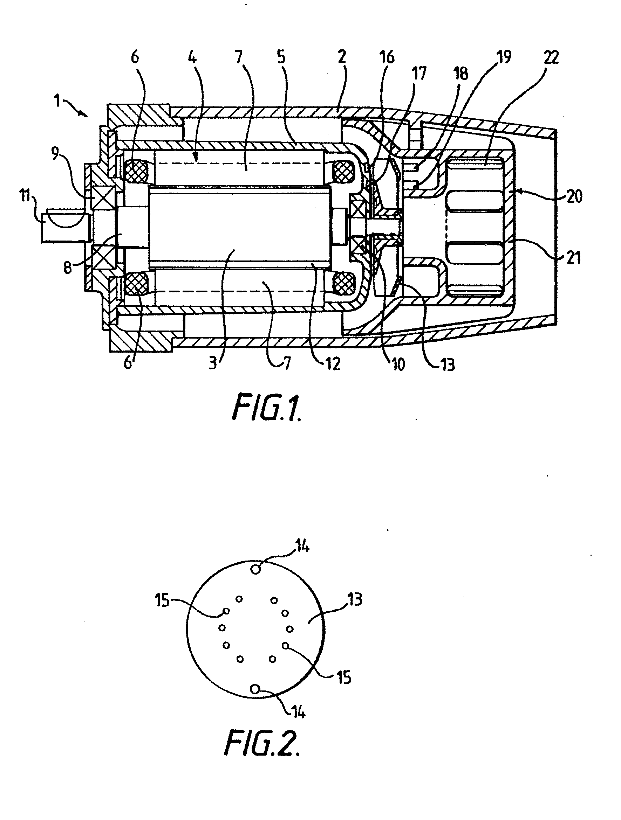

The brushless d.c. electric motor 1 which is shown in Figure 1 comprises a main housing 2 within which there are disposed a rotor 3 and a stator 4. The rotor and the stator are themselves disposed within an enclosed body 5, which is mounted in the main housing 2.

The stator 4 comprises a stator winding 6 wound on a stator core 7. The stator winding 6 is a polyphase winding. By way of example, it may be a 4-pole 3-phase winding disposed on stator laminations that are provided with twelve slots, so as to give one slot per pole per phase.

The rotor 3 is mounted on a drive shaft 8 which is journalled in a first set of bearings 9 which are mounted at the front of the main housing 2, and a second set of bearings 10 which are mounted at the rear of the enclosed housing 5. The forward end 11 of the drive shaft 8 affords an output shaft of the motor, which may typically be disposed within a power hand tool.

The rotor 3 is a permanent magnet rotor of cylindrical or drum-type construction. The magnetic material of the rotor preferably comprises a rare earth, so as to reduce rotor size to a minimum, for a desired energy density. By way of example, the rotor 3 may be of samarium cobalt ($SmCo_5$). A sleeve 12 of thermally insulative material (e.g. foamed plastics) is provided on the outer surface of the rotor 3, to minimise heat transfer between the stator 4 and the rotor 3. The sleeve 12 may be continued around the rotor 3 to insulate it electrically from the drive shaft 8, and thereby afford "double electrical insulation" of a power tool embodying the motor in a particularly convenient manner.

In addition to affording thermal and electrical insulation to the rotor 3, the sleeve 12 also serves to contain the rotor mechanically. This can be of particular significance, where the rotor is, as in the present example, of a permanent magnet construction. Although the provision of a foamed thermoplastics sleeve 12 is particularly convenient, the thermally and electrically insulative layer may be afforded in an alternative fashion - for example, by winding of a fibre around the rotor.

At the rear end of the drive shaft 8 there is mounted a fan 13 which, in use, is adapted to draw cooling air into the main housing 2 from the rear thereof, and cause it to pass over the enclosed body 5 in which the rotor and stator are housed, in order to afford cooling thereof.

The fan 13 serves also as an optical coding disc. To this end, it is formed with two sets of apertures. These are not shown in Figure 1, but their positions are illustrated diagrammatically in Figure 2. Thus, a first set comprises two diametrically opposed apertures 14 in the fan/coding disc 13, at a first radial distance from the centre of the disc. A second set comprises ten apertures 15 which are disposed at uniform $30^{\circ}$ intervals between the first apertures 14, at a second radial distance from the centre of the disc 13, less than the first radial distance at which the first apertures 14 are disposed. It will be seen that, in effect, the ten apertures 15 are arranged in two sub-sets each of five apertures, between the two first apertures 14.

Referring again to Figure 1, a first light transmitting element 16 (e.g. a light emitting diode - l.e.d.) is mounted in the rear face of the enclosed body 5, at a radial distance from the axis of the drive shaft 8 which corresponds to the first radial distance at which the first apertures 14 on the coding disc 13 are disposed from its centre. Similarly, a second light emitting element 17 is mounted in the rear face of the closed body 5 at a radial distance from the axis of the drive shaft 8 which corresponds to the second radial distance at which the second apertures 15 are spaced from the centre of the coding disc 13. The first and second sensors 18 and 19 are mounted in a heat sink unit 20, which is

0192469

itself mounted in the main housing 2. First and second sensors 18, 19 are aligned with the first and second light emitting elements 16, 17 respectively. Thus, it will be appreciated that, when one of the first apertures 14 in the coding disc 13 registers with the first light emitting element 16, the first sensor 18 is able to detect transmission of that light through the aperture 14. Similarly, the second sensor 19 is able to detect transmission of light through each of the apertures 15, as they register in turn with the second light emitting element 17.

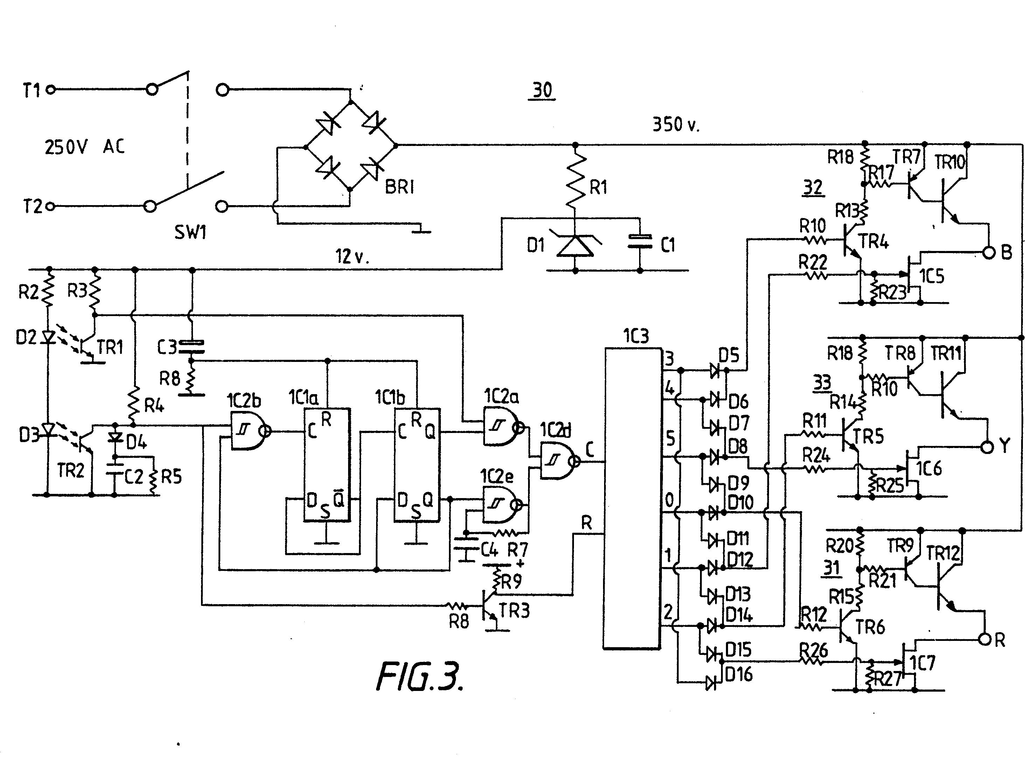

The heat sink unit 20 serves also to house electronic control circuitry (not shown in Figure 1), by means of which the motor 1 is controlled. As will be described below with reference to Figure 3, the electronic control circuitry is adapted to receive an alternating mains supply, and provide a polyphase alternating supply to the stator winding 6. The heat sink unit 20 provides a convenient mounting for printed circuit boards of the electronic control circuitry, and its rear face 21 provides a mounting surface for power semiconductor devices of the electronic control circuitry. The heat sink unit 20 is formed around its circumference with a plurality of vents 22, through which cooling air may pass. Thus, in use of the motor, the fan/coding disc 13 causes air to be drawn through the vents 22, over the electronic control circuitry, and then over the body 5 in which the rotor and stator are enclosed.

The electronic control circuitry 30 for the motor 1 is illustrated in Figure 3.

A regular alternating mains supply (e.g. 250 volts AC) is received on terminals T1 and T2, and switched via an ON/OFF switch SW1 of the motor 1 to a rectifier bridge BR1 to provide an unregulated 350 volt d.c. supply 0192469 from which the stator winding 16 is supplied. The output terminals of the control circuitry 30 to the stator winding 6 are denoted in a conventional manner as RY and B.

A 12 volt smoothed and regulated supply is obtained via a power dropper resistor R1, a smoothing capacitor C1 and a 12 volt Zener diode D1.

Two infra-red emitting diodes D2 and D3 are fed in series, via a resistor R2, from the 12 volt rail, and serve as the second and first light emitting elements 17, 16 respectively. Infra-red sensitive transistors TR1 and TR2 are powered via respective resistors R2 and R4, and serve as the second and first sensors 19, 18 respectively.

The output of the transmitter/receiver pair D2-TR1 is connected directly to an input of a Schmitt trigger IC2a, the output of which is connected via a further Schmitt trigger IC2d to a COUNT input C of a counter IC3.

The output of the transmitter/receiver pair D3-TR2 passes to a time constant circuit D4-C2-R5 and thence to an input of a Schmitt trigger IC2b, and also via a buffer stage TR3-R8-R9 to a RESET input R of the counter IC3.

The output of the Schmitt trigger IC2b is fed to a clock input C of the first of a pair of D-type flip-flops IC1a and IC1b. The RESET inputs R of the flip-flops IC1a and IC1b are both connected via a network R6-C3 to the 12 volt rail.

The inverted output Q of the first flip-flop IC1a is connected to its own D terminal and to the clock input C of the second flip-flop IC1b. The complementary

outputs Q and Q of the second flip-flip IC1b are connected respectively to inputs of the Schmitt trigger IC2a and a further Schmitt trigger IC2c, which is connected via a network R7-C4 as a free running multivibrator. The inverted output Q of the second flip-flop IC1b is tied to the D terminal of the same flip-flop, and also to an input of the Schmitt trigger IC2b. The output of the multivibrator IC2c-R7-C4 is connected to an input of the Schmitt trigger IC2d.

The counter IC3 is a ring counter, arranged to enable successively just one of six outputs 0 to 5. These outputs are connected via a network of diodes D5 to D16 to three driver circuits 31, 32 and 33, arranged to drive the phases R, Y and B respectively of the stator winding 6.

The driver circuit 31 is arranged to receive two logic inputs, on resistors R12 and R26 respectively.

In this particular example, +12 volts respresents logical "1".

The resistor R12 is connected to the base of a transistor TR6, whose emitter is tied to the ground, and whose collector is connected via a resistor network R15, R20 to the 350 volt rail. At the junction of resistors R12, R20, a further resistor R21 leads to the base of a first transistor TR9 of a Darlington pair, the emitter of the second of which transistors TR12 is connected to the output terminal R for the respective stator phase winding. The resistor R26 is connected directly to the gate of a power HEXFET, the source and drain of which are connected between the phase winding terminal R and ground. A resistor R27 is connected between the gate of the HEXFET IC7 and ground, to ensure rapid turn off by draining charge.

It will be appreciated that the driver circuits 32, 33 are identical to the driver circuit 31, and therefore require no further detailed explanation. However, it will be observed that their corresponding components carry different respective reference numerals to avoid confusion between the three separate circuits.

Operation of the electronic control circuit 30 will now be briefly described.

Firstly, it is assumed that the power is OFF, and that the motor is at rest. Upon closing the switch SW1 to switch on the power, a 12 volt signal is applied to the reset input R of the flip-flops IC1a and IC1b, via the CR network C3-R6. The complementary outputs of the second flip-flop IC1b therefore inhibit the Schmitt trigger IC2a, but enable the free running multivibrator IC2c-R7- C4, to pass clock pulses to the input C of the counter IC3, via the Schmitt trigger IC2d. The clock pulses cause a +12 volt logical "1" output to be cycled through the outputs 0 to 5 of the counter IC3.

Assuming that output 0 is the first one to be thus enabled, a +12 volt signal appears on the resistor R12 of the driver circuit 31. This causes transistor TR6 to conduct, lowering the base of the first Darlington transistor TR9, and causing the second Darlington transistor TR12 to conduct, thereby bringing the phase terminal R to +350 volts.

The same enabled output 0 also causes the resistor R22 of driver circuit 32 to be brought to +12 volts, via diode D11. This turns on the HEXFET IC5, causing the phase terminal B to be brought to ground (or the negative rail of the 350 volt supply, as the case may be).

The remaining input resistors of the driver circuits 31, 32 and 33 receive no +12 volt signal. Thus, the phase winding Y is effectively open circuit.

Upon the next clock pulse fed to the counter IC3, output 1 is enabled. This maintains a +12 volt signal on input resistor R22 of the driver circuit 32, to maintain the phase terminal B at ground. However, the +12 volt signal is also fed _via_ diode D13 to the input resistor R11 of the driver circuit 33, which is effective to connect the phase terminal Y to the positive rail of the 350 volt supply.

With output 1 enabled, the input resistors of the driver circuit 31 are at logical "o", so that the R phase of the stator winding is effectively open circuit.

When the next clock pulse is fed to the counter IC3, output 2 is enabled, thus maintaining the input resistor R11 of driver circuit 33 at logical "1", and maintaining the phase terminal Y at +350 volts. The same +12 volts signal at output 2 is fed _via_ diode D15 to the input resistor R26 of the driver circuit 31, thus switching on HEXFET IC7 and bringing the phase terminal R to ground. Whilst output 2 is enabled, both the input resistors of driver circuit 32 are at logical "o", and phase winding B is effectively open circuit.

It will be readily appreciated that, as the output of the counter IC3 is cycled in this way, an alternating signal, composed of the pulsed 350 volt d.c. supply, is fed to the three phases R, Y and B of the stator winding, at 120° phase difference. This results in a rotating magnetic field in the stator winding, which acts with the magnetic field of the rotor to cause the rotor to turn.

It will be appreciated that, as the rotor begins to turn, pulses begin to appear at the outputs of the infra-red sensitive transistors TR1, TR2, which detect the transmission of infra-red radiation through the respective apertures in the cooling fan/coding disc 13.

At first, the output of the transistor TR1 is blocked at the Schmitt trigger IC2a, because of the inhibiting signal appearing on the output Q of the second flip-flop IC1b.

However, pulses from the transistor TR2 are passed via the Schmitt trigger IC2b (which is enabled via the inverted output Q of the second flip-flop IC1b) to the clock input of the first flip-flop IC1a. The pulses from transistor TR2 are also fed via the buffer stage TR3,R8,R9 to reset the counter IC3.

When two pulses have been passed from the transistor TR2 to the flip-flops IC1a, IC1b - i.e., after about one revolution of the rotor following start-up, the outputs Q, Q of the second flip-flop IC1b are inverted, enabling the Schmitt trigger IC2a and inhibiting the multivibrator IC2c, R7,C4 and the Schmitt trigger IC2b. From this point, the motor runs up to full speed, and continues operation in response to the control pulses emanating from the transistors TR1 and TR2.

It will be appreciated that, when a pulse is generated by the transistor TR2, the counter IC3 is reset via its reset input R. Thereafter, the output of the counter IC3 is incremented by each pulse which then appears on transistor TR1. Due to the geometry of the apertures 14, 15 in the coding disc 13, it will be appreciated that a pulse is generated by transistor TR1 upon the rotation of the disc 13 through each successive segment of 30$^{\text{O}}$ mechanical, following a RESET pulse from the transistor TR2. In other words, after each RESET pulse from the transistor TR2, there follow five uniformly spaced COUNT pulses from the transistor TR1, each COUNT pulse corresponding to a shaft rotation of 30° mechanical. Following a further 30° mechanical rotation after the fifth count pulse, a further reset pulse is generated by the transistor TR2, and the sequence is repeated. Upon each increment of the counter IC3, the stator coil connections are changed, as has been outlined above.

It will be appreciated that the electric motor 1, when controlled *via* the electronic control circuitry 30, may provide a very reliable and efficient drive, especially for power hand tools. The motor can run at high speed without the disadvantages associated with commutator machines. In fact, the theoretical speed of the motor 1 is limited principally by the switching speed of the electronic control circuitry, which means that motor speeds may be obtained which are much higher than has been possible previously. By way of example, it may readily be possible to construct an electric motor such as that illustrated in Figures 1 to 3, having an operating speed of the order of 50,000 rpm.

As has been mentioned above, the use of rare earths for the permanent magnet rotor 3 may provide a very significant saving in weight, and this can be particularly important for power tools which are to be hand-held. At present, the preferred material for the rotor is sintered samarium cobalt. This is relatively expensive at the moment, but may become cheaper in time. Less efficient designs may be made using strontium ferrite, which is very cheap and readily available. An alternative material which is readily available, with properties in between sintered samarium cobalt and strontium ferrite, is polymer-bonded samarium cobalt.

However, this tends to deteriorate at an unacceptable rate if heated above 60°C.

A further material which may be suitable for the rotor 3 is neodymium iron. This may be cheaper than sintered samarium cobalt and have even better magnetic properties. However, again, this tends to have a temperature limitation of around 80°C.

It will be appreciated that, particularly if there are employed magnetic materials which are sensitive to high temperature, it is desirable to minimise heat transfer from the stator to the rotor. In fact, in the electric motor 1, virtually no heating occurs in the rotor 3 itself. Heating is principally caused by losses in the copper and iron of the stator, so that the only significant heating experienced by the rotor is by heat transfer across the stator/rotor air gap.

Heat transfer across the air gap is minimised by use of the thermally insulative sleeve 12 which, as mentioned above, may be of a foamed plastics material. Due to the enhanced magnetic properties of the rare earth material such as sintered samarium cobolt, the rotor 3 may be of a significantly smaller diameter than a rotor or conventional material. By way of example, in a typical design, a motor having a wound rotor and an output of the order of 1 kilowatt may have an air gap of about 0.4 mm. By using sintered samarium cobalt as a permanent magnet for the rotor, as in the motor 1, the air gap in a motor of similar output power may be increased to 2.0 mm. Therefore, whilst retaining a fairly conventional design of stator, the insulating sleeve such as 12 may have a thickness of 1.6 mm, whilst still leaving an acceptable mechanical clearance between the rotor and stator.

0192469

It is preferable that the plastics material of the sleeve 12 is of low thermal conductivity, and foaming may increase the insulation still further. The sleeve 12 could, however, be of any suitable material. It could be metal coated (e.g. with aluminium) on one or both surfaces, to further reduce heat transfer by radiation.

It is because the electric motor 1 may be made much more efficient than conventional motors (e.g. universal motors) that the rotor 3 and stator 4 may safely be disposed within the totally enclosed body 5, without danger of overheating. The motor 1 may therefore be used in dirty environments with reduced risk of damage to the motor. As mentioned above, it is of course important to cool the body 5, for which purpose the fan 13 passes cooling air over the surface of the body 5, to be exhausted via vents at the front end of the motor 1. However, depending upon the nature of the magnetic material of the rotor 3, it may be possible in certain circumstances to dispense with the forced air flow caused by the fan 13.

As has been noted above, the motor 1 may be much lighter than conventional motors (e.g. universal motors). In experiments, we have found that the weight of an electric motor for a portable hand tool may be reduced by as much as 50%. This may make the tool not only lighter, but easier to balance.

A particular safety feature of the electric motor 1 is that, in the event of failure of components of the electronic circuitry 30, the worst that can happen is that the motor 1 will stop. In other previously proposed motors, failure of components in the control circuitry may cause the speed of the motor actually to increase from a safe, controlled working speed to a maximum,

0192469

dangerous no-load speed.

In certain applications, it may be very desirable for the electric motor 1 to run at a predetermined speed. For example, the no-load speed of a conventional grinder is limited to the safe working speed of the disc employed. If the grinder is driven by a series motor, in a conventional manner, it slows down, thus reducing its effectiveness, as the disc is no longer running at optimum speed. By contrast, the electric motor 1 may run at its set speed, increasing its torque to overcome load, until its safe working current is exceeded. At this point, the control circuitry may be programmed to shed load by reducing current, or by switching off.

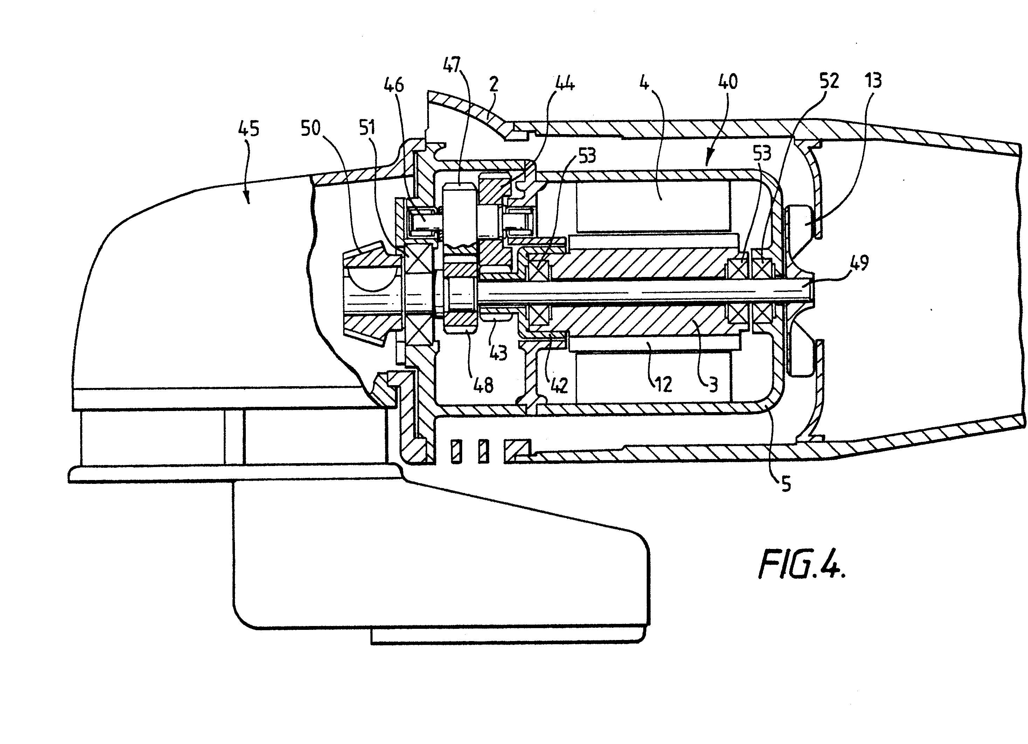

Referring now to Figure 4, there is shown an electric motor 40 which is generally similar to the motor 1 of Figures 1 to 3, in that it comprises a permanent magnet rotor 3 of a rare earth, having an insulating sleeve 12, and disposed with a polyphase wound rotor 4 within a totally enclosed body 5. A fan 13 is adapted to draw air through a main housing 2 of an angle grinder 45, which is driven by the electric motor 40. A rear portion 41 of the housing 2 may accommodate electronic control circuitry. It may be assumed that operation of the electric motor 40 in Figure 4 is generally similar to that of the electric motor 1 in Figures 1 to 3.

However, in Figure 4, the electric motor 40 is provided with an arrangement by which optimum use is made of bearings.

The motor 40 is arranged to rotate at very high speed - in this example, 45,000 rpm. A potential problem with this is that conventional motor bearings are not designed to operate at such high speeds. Thus, there would appear to be a requirement for an improved bearing, which itself may involve significant development and/or manufacturing costs. However, the arrangement illustrated in Figure 4 allows the electric motor 40 to operate at the high speed or 45,000 rpm, thereby achieving a high power/weight ratio, whilst using conventional bearings which are designed to operate at 22,500 rpm.

In Figure 4, the rotor 3 is arranged to rotate with a primary output shaft 42, which carries at its forward end a first gear 43. The first gear 43 meshes with a second gear 44, to give a 2:1 speed reduction. The second gear 44 is mounted for rotation on a lay shaft 46, together with a third gear 47. The third gear 47 meshes with a fourth gear 48, to give a 1:1 ratio. The fourth gear 48 is mounted for rotation upon a secondary output shaft 49, upon which the cooling fan 13 is mounted for rotation therewith. Mounted for rotation at the front of the secondary output shaft 49 is a bevel gear 51 which provides the drive for the grinding disc, further details of which are not given here, as they are not of particular importance to an understanding of the invention.

The secondary output shaft 49 is journalled in a first bearing 51 at the front of the enclosed body 5, and a second bearing 52 at the rear of the enclosed body 5. Moeover, the secondary output shaft 49 is journalled in a pair of bearings 53, which are mounted respectively at the front and rear of the rotor 3, and are adapted to rotate therewith.

The illustrated arrangement operates as follows.

The rotor 3 runs at full motor speed of 45,000 rpm. This rotation is transmitted via the primary output shaft 42 and the gear train 43, 44, 47, 48 to the secondary output shaft 49. Because of the speed reduction ratio of 2:1 afforded by the gears 43, 44, the secondary output shaft 49 rotates at half the speed of the primary output shaft - i.e. at 22,500 rpm. However, it will be appreciated that, because of the arrangement of the gear train, both the rotor 3 and the secondary output shaft 49 rotate in the same direction. The result of this is that the relative angular speed between the rotor 3 and the secondary output shaft is only 22,500 rpm, which is the angular speed as seen by the bearings 53.

As a result of this arrangement, no bearing in the motor 40 runs at a speed of greater than 22,500 rpm, even though the full rotor speed is 45,000 rpm. Thus, it is possible to use readily available bearings, at a great cost advantage.

It will be appreciated that an arrangement as illustrated in Figure 4 may be used with different gear ratios.

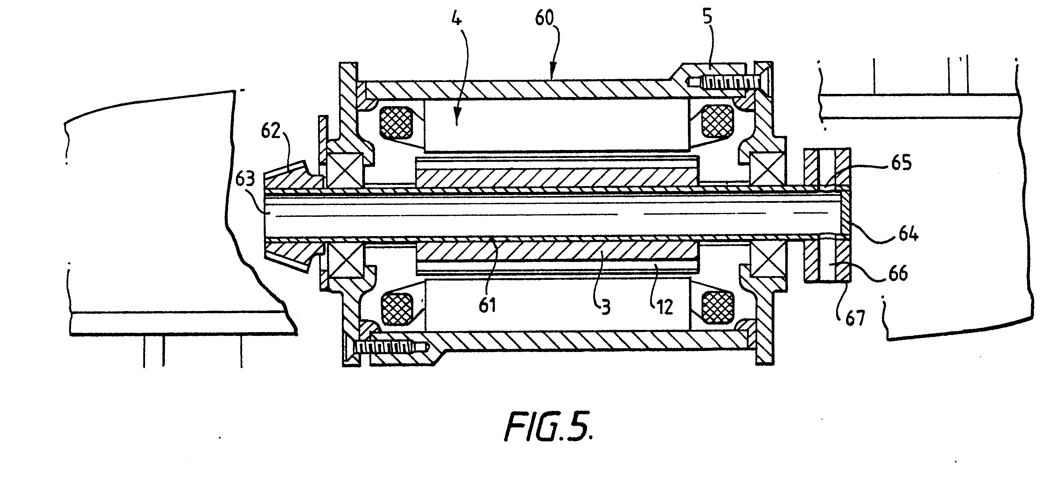

Turning now to Figure 5, there is shown an electric motor 60 which is generally similar to the electric motors shown in Figures 1 to 4, as regards the construction of its rotor and stator, and its electronic control circuitry. Thus, the motor 60 comprises a permanent magnet rotor 3 of samarium cobalt, having a thermally insulative sleeve 12. (Incidentally, it may be mentioned that, in all cases, the thermally insulative sleeve 12 may alternatively be placed on the stator, rather than the rotor.) The rotor 4 of the motor 60 is disposed, together with the stator 3, within a totally enclosed body 5.

In Figure 5, however, the rotor 3 is mounted on a hollow drive shaft 60, at one end of which there is mounted a bevel gear 62 for driving an appropriate tool. That end of the driving shaft 61 is open at 63, to the ambient air.

The opposite end of the rotor 61 is closed by a plug 64. Adjacent the plug 64, the drive shaft 61 is formed with a plurality of radial openings 65, each of which registers with a respective radial passage 66 formed in a disc 67 which is fitted over the respective end of the drive shaft 61.

In use, air is free to enter the drive shaft 61 through the open end 63. As the drive shaft 61 rotates, air is expelled by centrifugal force through the radial openings 65 and the radial passages 66 in the disc 67. The disc 66 therefore acts as a radial-flow impeller, causing air to flow in through the open end 63 of the drive shaft 61, and out via the passages 66.

The forced air flow through the drive shaft 61 assists cooling of the rotor 3, and this may be particularly important where temperature sensitive rare earths are used for the permanent magnet material of the rotor.

Although the arrangement illustrated in Figure 5 is arranged to pass air through the drive shaft 61, alternative coolant fluids may be used. For example, where the motor 60 is not necessarily to be used in a hand held power tool, water may be used as a coolant fluid, with appropriate connections to the drive shaft 61.

As another alternative to the arrangement illustrated in Figure 5, the drive shaft 61 may be hollow as shown, but instead of the arrangement of disc 67 and openings 65 at the right hand side thereof (as seen in

0192469

Figure 5), there may be fitted into the drive shaft 61 a heat pipe, the cool end of which projects into the ambient air outside the enclosed body 5. The cool end of the heat pipe may be fitted with a heat sink which takes the form of a finned aluminium block. The heat pipe will thus rotate with the shaft, and the heat sink may be in the form of a centrifugal impeller. Thus, it may be cooled itself by the air drawn through it, and further cause cooling of the stator, by causing air to pass over the enclosed body 5.

As a further alternative, the drive shaft 61 may comprise a core of a material of high thermal conductivity. For example, the shaft 61 may comprise a hollow steel sleeve within which there is disposed a core of aluminium or copper, so as to conduct away as efficiently as possible any heat from within the rotor. Such a core of thermally conductive material may lead to an external heat sink - for example, in an arrangement as described generally above. Instead of providing a steel sleeve with a heat conductive core, the shaft 61 may be made entirely of a material of good heat conductivity - e.g. of aluminium.

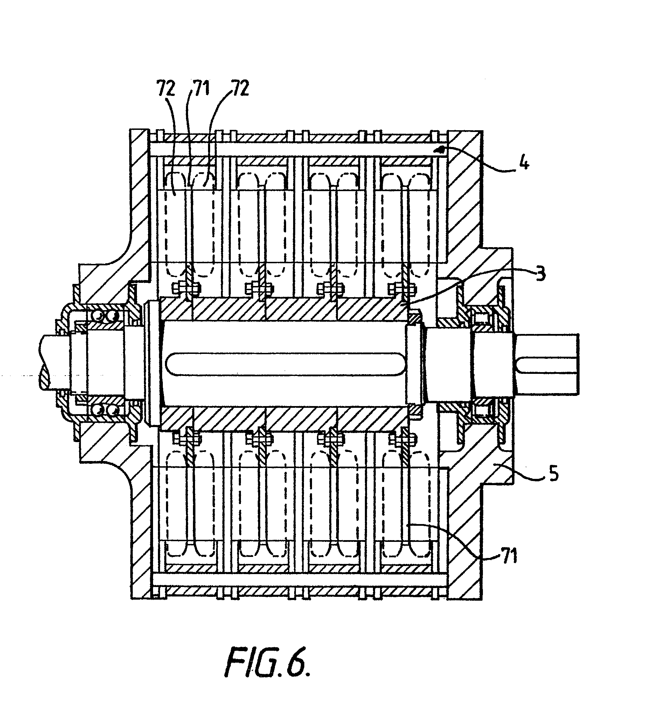

The motors illustrated in Figures 1 to 5 have rotors of drum or cylindrical form. In Figure 6, the electric motor 70 is in principal similar to the motors illustrated in the other figures. Thus, it has a rotor 3 and a stator 4 which are disposed within a closed housing 5. The stator 3 is of a rare earth permanent magnet material such as sintered samarium cobalt, and the stator 4 is a polyphase wound stator, arranged to be supplied with a polyphase supply by suitable electronic control circuitry - for example, similar to that illustrated in Figure 3.

0192469

However, in Figure 6, the rotor 3 of the motor 70 is of disc form, rather than of cylindrical form. Thus, the permanent magnet rotor 3 comprises four axially spaced discs 71, each of sintered samarium cobalt or other rare earth material. Each of the discs 71 is disposed between two annular pole pieces 72 of the wound stator 4.

It will be appreciated that the disc construction of the rotor 3 in the electric motor 70 may afford a much greater magnetic circuit between the rotor and stator, than in a machine of similar overall length, having a drum or cylinder rotor. The design illustrated in Figure 6 is particularly suitable for large capacity motors - e.g. of 50 or 100 kw.

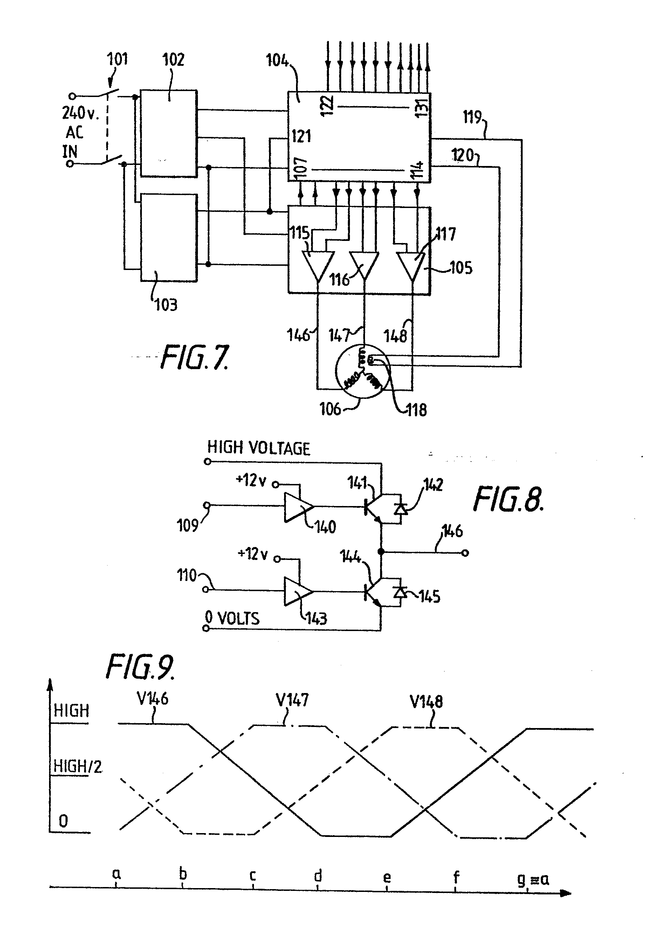

The control circuitry that is illustrated in Figure 7 may be employed as an alternative to that shown in Figure 3. The general principle of operation of the circuitry shown in Figure 7 is as follows.

Upon closure of a switch 101, an input voltage is applied to two power supplies 102 and 103. The input voltage, although shown in the diagram as 240v a.c., may be any suitable supply, as suitable for use with the motor 106 to be driven.

The first power supply 102 provides a regulated 5 volt supply for a control unit 104 and an unregulated 12 volt supply for a drive unit 105. The second power supply 103 provides a high voltage supply for the drive unit 105, and this is essentially an unsmoothed, full wave rectified mains voltage.

The control unit 104 has inputs 107 and 108 which monitor the high voltage supply current, to allow the control unit 104 to shut down the motor 106 in the event

0192469

of a current overload. Inputs 119 and 120 to the control unit 104 supply a signal from a search coil 118 which is provided in one phase of the stator of the motor 106. The signal from the search coil 118 is used to detect the angular position of the rotor shaft.

The control unit 104 has outputs 109 to 114, which are passed to the drive unit 105 to enable a 3-phase voltage to be supplied to the motor 106 via switches 115, 116 and 117.

An input 121 to the control unit 104 monitors the instantaneous voltage of the high voltage supply, allowing the control unit 104 to protect the drive circuit 105 and the motor 106 from the effects of peak voltages, and also to avoid shut down due to false overload signals which would otherwise occur due to high currents flowing at peak voltages.

The control unit 104 has a number of inputs, which offer the following options:

a direction input 122, which may select clockwise or anti-clockwise rotation of the motor shaft;

a speed input 123, which will cause the motor shaft to rotate at a fixed speed, in dependence upon the value of the signal applied to the input 123, rather than obey the natural characteristics of a permanent magnet brushless motor;

a servo operation input 124 which may cause rotation of a fixed number or revolutions, or fractional revolutions, of the motor shaft;

a load shedding input 125 which may cause rapid stopping of the motor;

a soft stopping input 126 which may cause a controlled deceleration of the motor; and

a re-start input 127 which may allow re-starting of the motor after shut down, without recourse to the mains switch 101.

Additionally, the control unit 104 affords additional outputs which may afford the following options:

an overload output 128 which may provide an indication that the motor has been shut down due to a current overload;

an approaching overload output 129 which may provide an indication that the motor has exceeded a preset percentage of its rated load;

a direction output 130 which may provide an indication of the direction of rotation of the rotor; and

a speed output 131 which may provide an indication of motor speed.

It is to be appreciated that, although reference is made above to the provision of a search coil 118, this may alternatively be a Hall effect device or other detector of magnetic fields.

An example of the construction of each of the amplifiers 115, 116 and 117, which operate as switches, is shown in Figure 8. In fact, Figure 8 illustrates the first amplifier 115, but it is to be understood that the other amplifiers 116 and 117 are of similar construction.

Presence of signal 109 (that is the presence of a signal at the output 109 of the control unit 4) at the input of a pre-drive amplifier 140 turns on a switching transistor 141, which connects the respective phase output 146 to the high voltage supply. Presence of signal 110 on a complementary pre-drive amplifier 143 similary turns on a switching transistor 144, connecting the phase output 146 to 0 volts. Diodes 142 and 145 protect the transistors 141 and 144 from high circulating currents which are characteristic of switching an inductive load, here, of the motor 106. Although Figure 8 shows the provision of transistors 141 and 144, these may be replaced by thyristors or power FET's.

It will be appreciated that the two signals 109 and 110 must never be present simultaneously, as otherwise the high voltage supply will be short circuited.

If neither signal 109 nor 110 is present, both devices 141 and 144 are turned off, and the phase output 146 will go to the voltage at the star point of the motor, halfway between the voltages at the other phases 147 and 148.

Table 1 below shows the effects of signals 109 to 114 on the phase outputs 146, 147 and 148, and Figure 9 shows graphically the resultant 3-phase supply to the motor 106, in idealised form. In Table 1 and Figure 9, the symbol V146 represents the voltage present at phase 146, and so on.

| Step | Signals Present | V146 | V147 | V148 |
|------|-----------------|------|------|------|
| a | (9)    (12) | High | 0 | High/2 |
| b | (9)    (14) | High | High/2 | 0 |
| c | (11)   (14) | High/2 | High | 0 |
| d | (10)   (11) | 0 | High | High/2 |
| e | (10)   (13) | 0 | High/2 | High |
| f | (12)   (13) | High/2 | 0 | High |
| g=a | (9)    (12) | High | 0 | High/2 |

TABLE 1

An example of the mode of operation of the circuitry of Figures 7 and 8 will now be given.

Firstly, the circuit operates in a "start up" mode, to start the motor. In this mode, the control circuit initially cycles the signals 109 to 114 through the steps shown in Table 1. The signals are supplied as pulses of only short duration (typically 1 to 2 milliseconds) and the period between successive steps may be of the order of 20 milliseconds. This is sufficient to cause the motor to rotate at approximately 2500 rpm. The sequence of Table 1 is repeated cyclically, with the pulse duration and the period between steps being reduced fractionally at each step. The period between steps is reduced more rapidly than the pulse duration. At some point these two periods become equal at a predetermined value, and the motor is deemed to be started. This method of starting avoids large starting currents and provides a "soft" start.

Once the motor has started, the control circuit counts the time between successive signals from the search coil 118. This time period is divided by six, and the result gives the pulse width and time between steps for the next cycle of Table 1. This period is updated at every signal from the search coil 118.

0192469

The time between signals from the search coil 118 is representative of the motor speed. The signal at inputs 107 and 108 to the control unit 104 gives an indication of motor load. Speed and load are corollated within the control unit 104 to give the optimum timing of field current with respect to rotor position (a reference rotor position being given by the signal from the search coil 118). The control unit 104 may thus commence each cycle of Table 1 a calculated time after receiving a signal from the search coil 118 and thus maintain optimum performance from the motor for all load and speed conditions.

The motor may be forced to run at any fixed speed, by determining the period between steps in Table 1. Load compensation may be derived by varying the pulse duration of each step of each Table 1. Inputs 107 and 108 to the control unit 104 provide an indication of the motor load, whilst the time between a signal from the search coil 118 and the start of a cycle of Table 1 gives a measure of the rotor slip. Speed, slip and load are corollated within the control unit 104, and the corresponding pulse width calculated. Should the required pulse width exceed the period between steps in Table 1, then the motor will be deemed to be overloaded, and will shut down.

In addition to the condition for overload given above with respect to fixed speed running, the motor 106 will be shut down by the control unit 104 if either a) the current measured at inputs 107 and 108 to the control unit 104 exceeds a predetermined value or b) the period between successive signals from the search coil 118 exceeds the previous such period by a predetermined amount.

Reverse operation of the motor 106 may be achieved by reversing the sequence of Table 1.

Servo operation of the motor 106 may be achieved by supplying only a fixed number of cycles or parts of cycles of Table 1.

Soft stopping is the reverse of the soft start up procedure. The period between the steps of Table 1 is increased until the motor has decelerated to a halt. The pulse durations of the steps may or may not be increased.

To achieve load shedding, the motor may be stopped rapidly by causing signals 110, 112 and 114 to be present simultaneously. This has the effect of short-circuiting the field windings of the motor 106 by connecting all three phases 146, 147 and 148 to 0 volts, thus causing the field windings to oppose strongly any change in magnetic field caused by movement of the rotor.

The control unit 104 is advantageously programmed to afford peak voltage protection, as will now be explained.

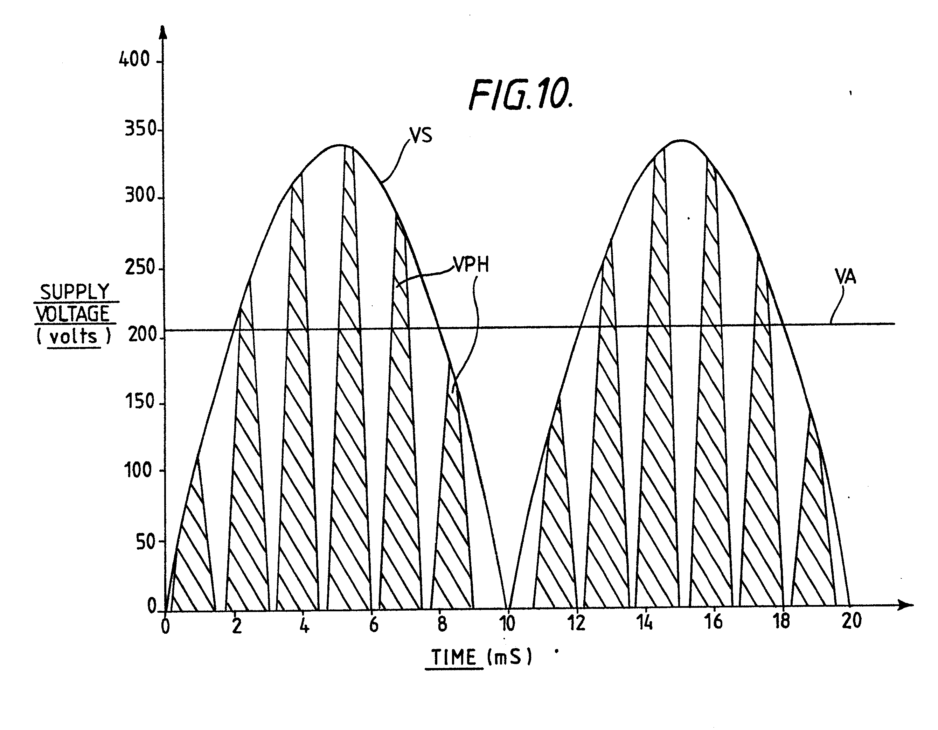

Whilst the illustrated control circuit is intended to derive the motor supply from a standard 240 volt 50 cycle source (or thereabouts), the running speed of the motor 106 may be 20,000 rpm or faster. The implication of this is that, in normal operation, the cycle of Table 1 will be repeated more than six times in any one half cycle of the mains supply. This effectively offers the drive circuit a very random d.c. supply, varying between 0 and 345 volts. Figure 10 illustrates this resulting variation in the supply voltage over a full mains cycle. In Figure 11, VS is the wave form derived from full wave rectification of the mains supply voltage (typically 240 volts) and VA illustrates the average value (typically 207 volts) of VS. The shaded portions VPH of the diagram are the resulting voltage supplied to any one phase winding of the motor 106.

Since the current supplied to the motor 106 is proportional to the switched voltage less the generated back EMF at any speed, then high values of switched voltage will cause undesirable and possibly harmful currents to flow. In particular, for a motor designed to run at the average value VA of the full wave rectified supply VS, voltages above 207 volts (typically) may cause such currents to flow.

This may be overcome by sampling the instantaneous high voltage supply, at input 121 of the control unit 104. Whenever the voltage VS rises above 207 volts, then each step of Table 1 is supplied by the control unit 104 as a series of shorter pulses, rather than as a single pulse. Such pulse width modulation maintains the average voltage during the overvoltage period at approximately 207 volts. The shorter pulses will be of such duration that the current in the motor does not exceed an acceptable value.

As an alternative to this, a series regulator may be placed in the high voltage supply 103, to prevent the high voltage output to the drive unit 105 from rising above 207 volts.

The use of peak voltage protection with an unsmoothed supply can be highly advantageous, as it permits a relatively low cost, compact power supply, which would not be possible if the supply were smoothed by bulky and expensive capacitors and chokes.

Although the circuitry illustrated with reference to Figures 7 and 10 has been described in relation to a mains supply of 240 volts 50 Hz, it will readily be appreciated that similar circuits may operate on other

0192469

mains supply voltages and frequencies.

The invention is not restricted to the details of the foregoing embodiment(s). The invention extends to any novel one, or any novel combination, of the features disclosed in this specification and/or drawings, or to any novel one, or any novel combination, of the steps of any method or process disclosed herein.

CLAIMS:

1. An electric motor (1) comprising a permanent magnet rotor (3), a polyphase wound stator (4), and electronic control circuitry arranged to generate a polyphase alternating supply and to connect said supply to the stator (4) thereby to produce a rotating magnetic field, characterised in that the rotor (3) is surrounded by a layer (12) of thermally insulative material.

2. A motor according to claim 1, wherein said thermally insulative material is also an electrically insulative material.

3. A motor according to Claim 1 or 2, wherein the magnetic material of the rotor comprises a rare earth.

4. A motor according to Claim 1, 2 or 3, wherein said control circuitry is adapted to receive a d.c. supply and to invert it to generate said polyphase alternating supply.

5. A motor according to any preceding claim, wherein said control circuitry comprises detector means arranged to detect change of angular position of the rotor.

6. A motor according to any preceding claim, including a housing within which said rotor, stator and electronic control circuitry are disposed, and an inner enclosed body within which the rotor and stator are housed and to which said electronic circuitry is external.

7.        An electric motor comprising a permanent magnet rotor, a polyphase wound stator, and electronic control circuitry arranged to generate a polyphase alternating supply and to connect said supply to the stator thereby to produce a rotating magnetic field, wherein the rotor is mounted on a shaft which is provided with conduction means adapted to conduct heat from, and thereby to cool, the rotor.

8.     A motor according to any one of Claims 1 to 6 and also according to Claim 7.

9.     A power tool, preferably a portable hand tool, provided with an electric motor according to any preceding claim.

10.        A power tool comprising a rotary motor, an output shaft, and bearings for the output shaft, the bearings being arranged to rotate in the same sense as the output shaft such that the relative angular speed of the output shaft, with respect to the bearings, is less than its absolute angular speed.

11.        A power tool according to Claim 10, wherein said output shaft is a primary output shaft arranged to rotate with the rotor of the motor, and the tool further comprises a secondary output shaft and a gear train which connects said output shafts and is arranged to step down the angular speed between the primary and secondary output shafts.

12.        An electric motor comprising a rotor, a stator, electronic control circuitry arranged to generate an alternating supply and to connect said supply to the stator thereby to produce a rotating magnetic field, a magnet arranged to rotate with the rotor, and a search coil arranged to detect the magnet and therefore the angular position of the rotor.

13.      An electronic control circuit for an electric motor, the circuit being arranged to generate an alternating supply and to connect said supply to the stator of the motor thereby to produce a rotating magnetic field, the circuit being adapted to receive a rectified but unsmoothed power supply and including current limiting means for limiting current flow to the stator during excursions of the power supply above a predetermined level.

14.      An electronic control circuit for an electric motor, the circuit being arranged to generate an alternating supply and to connect said supply to the stator of the motor thereby to produce a rotating magnetic field, the circuit being adapted to receive input signals representing operating parameters of a motor under control, and to calculate therefrom optimum timing parameters of the alternating supply to the motor.

**FIG.1.**

**FIG.2.**

FIG.3.

FIG.4.

0192469

*FIG.5.*

FIG.6.

FIG.7.

FIG.8.

FIG.9.

FIG.10.

SUPPLY VOLTAGE ( volts )

TIME ( mS )

VS

VPH

VA

7/7

0192469